(19) Europäisches Patentamt
European Patent Office
Office européen des brevets

(11) EP 1 977 594 B1

(12) **EUROPEAN PATENT SPECIFICATION**

(45) Date of publication and mention of the grant of the patent:
**11.01.2012 Bulletin 2012/02**

(21) Application number: **07744835.5**

(22) Date of filing: **31.05.2007**

(51) Int Cl.:
***H04N 5/74*** *(2006.01)* ***H04N 17/04*** *(2006.01)*

(86) International application number:
**PCT/JP2007/061496**

(87) International publication number:
**WO 2008/007507 (17.01.2008 Gazette 2008/03)**

(54) **METHOD AND SYSTEM FOR ALIGNING AN ARRAY OF PROJECTORS**

VERFAHREN UND SYSTEM ZUR AUSRICHTUNG EINES PROJEKTORARRAYS

PROCÉDÉ ET SYSTÈME PERMETTANT L'ALIGNEMENT D'UN ENSEMBLE DE PROJECTEURS

(84) Designated Contracting States:
**DE FR GB**

(30) Priority: **10.07.2006 US 483987**

(43) Date of publication of application:
**08.10.2008 Bulletin 2008/41**

(73) Proprietor: **MITSUBISHI ELECTRIC CORPORATION**
**Chiyoda-ku**
**Tokyo 100-8310 (JP)**
Designated Contracting States:
**DE FR GB**

(72) Inventors:
- **VAN BAAR, Jeroen**
**Arlington, Massachusetts 02474 (US)**
- **RASKAR, Ramesh**
**Cambridge, Massachusetts 02141 (US)**
- **THORNTON, Jay E.**
**Watertown, Massachusetts 02472 (US)**

(74) Representative: **Pfenning, Meinig & Partner GbR**
**Patent- und Rechtsanwälte**
**Theresienhöhe 13**
**80339 München (DE)**

(56) References cited:
**US-A1- 2003 052 837**
**US-A1- 2004 085 256**
**US-A1- 2005 206 857**
**US-A1- 2006 038 927**
**US-B1- 6 755 537**

EP 1 977 594 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

This invention relates generally to rear-projection display devices, and more particularly to aligning an array of abutting rear-projection display devices.

Background of the Invention

It is common to use an array of rear-projection display devices (tiles) in command and control environments. With a large array of tiles, it is possible to display large images at a high resolution that cannot be achieved with-a single display unit. Often, different images are displayed simultaneously by using combining hardware. For example, in a surveillance application, videos, floor plans, and environmental data can be displayed at the same time by the various tiles.

In typical display arrangements, the tiles are stacked three or four rows high, and often tens of columns wide. When rear-projection tiles are configured into a display, there are horizontal and vertical gaps (seams) between neighboring tiles. To minimize the width and height of these seams, the tiles are designed to have borderless display screens and each projection covers the entire screen. Typical viewing distances of large tiled arrays are such that the physical seams, about 1 mm, are not necessarily obvious.

Even though the projections of adjacent tiles are separated by a seam, there still is a need for accurate alignment of the tiles. One might assume that if the projections and the screens are perfectly aligned physically, i.e., the corners of the projections correspond exactly with the corners of the screen, then alignment is automatic. However, this is true only if (a) the tiled arrangement is such that the screens form a grid with perfectly straight lines, (b) one can construct tiles that maintain alignment even when being moved, and (c) each projection is perfectly rectangular and has uniform spacing. The misalignment between tiles in such an arrangement is due to any combination of (a), (b) and (c) not being true.

Even if the viewing distance with respect to the entire display configuration is relatively far, it is well known that even small discontinuities are annoying to viewers. This is especially true when the displayed content is dynamic and moving in a direction parallel to a discontinuity between the screens.

In contrast, front and rear projection systems that can overlap their projections on a display surface have the advantage of being able to average the contributions of the projections to provide a smooth transition in an overlap region. Typically, this is done by pre-blending and warping images in overlapping parts of projected images, Raskar et al., "Blending Multiple Views," In the tenth Pacific conference on computer graphics and applications, pages 145-153, October 2002. This is particularly true when the alignment is not perfect.

However, when the rear-projectors are abutting, with or without small seams, one cannot take advantage of the blending technique, and thus, alignment errors have to be minimal. Furthermore, in a tiled display for real-time data and images, it is not practical to pre-blend and/or warp output images from different sources.

Cameras have been used for aligning front-projector systems. Output images are projected. A camera acquires input images of the projected images, and an alignment procedure corrects for misalignments. In a majority of cases, the alignment involves the blending and warping of the output signal prior to display, Raskar et al., "Multiprojector Displays using Camera-based Registration," In IEEE Visualization, October 1999, Raskar et al., "A Low Cost Projector Mosaic with Fast Registration," In Fifth Asian Conference on Computer Vision, pages 161- 168, January 2002, and Sukthankar, et al., "Smarter Presentations: Exploiting Homography in Camera-Projector Systems," In International Conference on Computer Vision, 2001. A decomposition to obtain a pose of the projector is not necessary in those cases. Instead, homographies between a camera and a projector can be applied directly for warping projector input images.

For large multi-projector displays some global registration is required to ensure that the overall display is aligned, Chen et al., "Scalable Alignment of Large-Format Multi-Projector Displays Using Camera Homography Trees," In IEEE Visualization, 2002, and Raskar et al., "ilamps: geometrically aware and self-configuring projectors," ACM Trans. Graph., 22(3):809-818, 2003.

Another system is a combination of image warping and mirror adjustment to direct the projection to different locations, Pinhanez et al., "The Everywhere Displays Projector: A Device to Create Ubiquitous Graphical Interfaces," In Ubiquitous Computing 2001 (Ubicomp"01), September 2001, and Pinhanez et al., "Using a Steerable Projector and a Camera to Transform Surfaces into Interactive Displays," In ACM Conference on Human Factors in Computing Systems (CHI 2001), pages 369-370, March 2001. The distortion introduced by the projection onto a surface can be determined from camera images, and compensated for by pre-warping the output image. A steerable mirror directs the projection onto different areas of a display surface. The mirror does not compensate for any distortion that arises from the projections onto the surface.

Also known from the prior art (US 2004/085256 A1) is an alignment within a multi-projector display system. Test pattern images are captured and tile-to-camera maps as well as camera-to-mural maps are determined for the plurality of projectors with a camera. Correction data is generated, corresponding offsets and pose parameters for each projector are extracted and parameters to be applied to motorized positioners to vary the alignment, the orientation and zoom of each projector are determined.

The prior art also knows (US 6,755,537 B1) a system for aligning multiple projectors. The projectors can be front and rear projectors and can include camera-sub-systems to acquire input images. Each projector can perform a keystone correction if it is skewed. Structured patterns to be acquired by the camera system can be used. Also a global alignment method relying on pairwise homographies between a projector-sub-system of one projector and the camera-sub-system of a neighbouring projector can be performed.

It is desired to align multiple, abutting rear-projection devices automatically.

## Disclosure of Invention

A system and method aligns an array of projectors by performing independently a parametric coarse alignment for each projector, and by performing jointly a non-parametric fine alignment for each projector and adjacent projectors. The non-parametric fine alignment can also be performed independently for each projector.

## Effect of the Invention

The method for aligning an array of projectors according to the invention is set out in claim 1.

A corresponding system is defined in claim 12.

The invention provides a system and method for automatically aligning multiple rear-projection tiles. By applying a coarse parametric alignment stage, followed by a non-parametric fine refinement stage, we can achieve an accuracy that is very close to manual alignment. Automatic alignment has several advantages over manual alignment. First, automatic alignment does not require an alignment expert to perform the alignment. Given that each tile has six degrees of freedom for adjusting the projection, alignment is not straightforward for someone without extensive experience.

A second advantage is the fact that automatic alignment can leverage the concurrent update capability of the rear-projection tiles. Thus, the time required to perform the alignment is reduced significantly reducing compared to manual alignment.

## Brief Description of the Drawings

Figure 1 is a front view of an array of rear-projection devices according to an embodiment of the invention;

Figure 2A is a side view of a rear-projection device according to an embodiment of the invention;

Figure 2B is a flow diagram of an alignment method according to an embodiment of the invention;

Figure 3 is a diagram of x, y deltas between ideal points and a current projection;

Figure 4 is a diagram of feature points of adjacent projections;

Figure 5 is a flow diagram of a first stage of alignment of an individual projector according to an embodiment of the invention;

Figure 6 is a flow diagram of a second stage of alignment of an individual projector according to an embodiment of the invention;

Figure 7 is a flow diagram of aligning multiple projectors according to an embodiment of the invention;

Figure 8 is a diagram of ideal feature point alignment;

Figure 9A is patterns of features before aligning according to an embodiment of the invention; and

Figure 9B is patterns of features after aligning according to an embodiment of the invention.

## Best Mode for Carrying Out the Invention

Figure 1 shows an array 110 of rear-projection devices ("tiles") according to our invention. The array has, for example, four rows and ten columns of tiles 200. Alignment patterns with known features are rear-projected onto screens of the tiles. The features are due to screen pixels. The invention provides a system and method for aligning the tiles using input images 121 acquired by a camera 120, see Figure 2A. Although the invention is described for an array of non-overlapping rear-projectors, it should be understood that the method according to the embodiments of the invention can also be applied to overlapping rear-projectors, or to front-projectors that display non-overlapping or overlapping images.

Figure 2A shows a side view of one tile 200. The tile includes a display screen 210, a projector 220, a mirror 230, and a six degrees of freedom (6 DoF), i.e., three translation and three rotation, adjustable platform 240 on which the projector is mounted. A light path 221 is "folded" by the mirror mounted at a 45o angle. A pose of the projector can be adjusted by the six stepping motors of the platform. The motors move the projector in motor stepping units. Therefore, as described below, we determine a relationship between the stepping units of the motors and screen pixels.

The camera 120 is connected to a conventional computer system 130, e.g., a PC or laptop device via input ports. The computer system includes a microprocessor, memory, busses, and I/O devices. The computer system is also connected to the projector via output ports.

There can be several sources of distortions in the system. There can be barrel distortion in the camera lens and/or the projector lens. There also can be non-linear distortion due to mirror 230 curvature, and a small amount of distortion due to curvature of the screen 210. These distortions cause misalignments between tiles. Therefore, the computer system can perform an aligning method 250 according to an embodiment of our invention, as shown in Figure 2B.

The method first performs a parametric coarse alignment 500 independently for each projector. Then, optionally, a first non-parametric fine alignment 600 is performed independently for each projector. Finally, a second non-parametric alignment 700 is performed jointly for each projector and adjacent projectors. The parametric alignment solves some equation to directly compute adjustment parameters. The non-parametric alignment is an iterative approach that tries to minimize an error in alignment. The first non-parametric is performed independently for each projector, while the second non-parametric alignment is performed jointly for each projector and adjacent projectors.

During the alignment, each projector displays an alignment pattern (projection) with known features on the screen. Figures 9A and 9B show the feature patterns for 2 x 2 array of tiles before and after aligning according to the embodiments of the invention. We use a homogeneous notation for both 2D and 3D coordinates. Our key observation is that optically a projector is essentially like a camera. This allows us to model the projector as a pinhole device. The screen 210 of the rear-projection tile is defined as a plane in 3D space with coordinates $X_s = (x, y, z, 1)^T$, where T is a transpose operator. The screen can be observed by the camera 120. We assume that the plane of the screen coincides with the Z = 0 depth plane. Thus, we have $X_s = (X, Y, 0, 1)^T$.

Coordinates of the camera image plane are denoted by $X_c = (U, V, 1)^T$, and coordinates of the projector image planes are $X_p = (U, V, 1)^T$, where

$$U = u/w \text{ and } V = v/w$$

for a homogeneous coordinate (u, v, w). We can relate 3D screen points to 2D image points using a camera (projector) projection matrix

$$x \cong PX = A[R \mid T]X, \qquad (1)$$

where A is a matrix of the intrinsic parameters of the camera (projector), and R, T are the rotation and translation with respect to a world coordinate system. In our case, the world coordinate system has an origin located at the upper left-hand corner of the screen, as viewed by the camera.

## Parametric Alignment

As described above, the projector 220 is mounted on the 6 DoF adjustable platform 240. The six degrees include three for rotation and three for translation. The goal of the geometric alignment method 250 is to:

determine a current pose (R, T) of the projector with respect to the screen;
determine a difference between the current pose and an ideal pose; and

adjust the platform according to the difference.

Decomposition into R and T

To determine the pose of the projector with respect to the screen, we observe from equation (1) and the 3D points representing the screen corners that

$$x \cong A[R \mid T]\begin{bmatrix} X \\ Y \\ 0 \\ 1 \end{bmatrix} = A\{R_1, R_2. R_3 \mid T]\begin{bmatrix} X \\ Y \\ 0 \\ 1 \end{bmatrix} = A[R_1\, R_2 \mid T], \qquad (2)$$

where $A[R_1\ R_2\ |T]$ is a 3 x 3 matrix, which in fact is the homography induced by the screen plane. If the matrix A is known, then the homography can be decomposed into $R_1$, $R_2$, and T by pre-multiplying with the inverse matrix $A^{-1}$.

As shown in Figure 5, our goal is to determine R and T for the projector. To achieve this, we perform the following steps of a first coarse alignment stage 500. We determine 510 the intrinsic parameters Ap of the projector, and we determine 520 the homography $H_{cs}$ between the image planes of the screen and the camera, these two steps are performed one time. We determine 530 the homography $H_{pc}$ between the image planes of the projector and the camera. We determine the homography $H_{sp}$ from $H^{-1}{}_{pc}$. $H_{sc}$. We test 550 to see if the result achieves the desired precision, and accept 599 the result. Otherwise, we determine 560 if the maximum number of iterations have been performed, and quit if true.

Otherwise, we decompose 570 $H_{sp}$ with the inverse matrix $A^{-1}{}_p$ to obtain rotation matrices $R_1$, $R_2$, and the translation matrix T, and transform 580 these to motor adjustments, and adjust 590 the platform accordingly, and repeat 595.

To determine the third column of the rotation matrix R we use the property that R is orthonormal, and then find $R_3 = R_1 \times R_2$.

Projector Intrinsic Parameters

To decompose 570 the homography $H_{sp}$, we use the intrinsic parameters of the projector. This calibration is performed by moving the projector to at least three different poses with respect to the screen using the adjustable platform. Note that this process can also produce estimates of the distortion parameters for the projector lens. In principle one can estimate the intrinsic parameters for each rear-projection tile separately prior to geometric alignment. Unfortunately, estimating the intrinsic parameters is time consuming due to the latency introduced by mechanically adjusting the platform to change the pose of the projector. Therefore, we estimate the intrinsic parameters only one time for a specific model of the rear-projection tile. We assume all other tiles with same model have similar intrinsic parameters.

Ideal Projector Pose

The adjustment of the platform is computed as the difference between a current pose and an ideal pose. We define the ideal pose as the pose for the projector that exactly maps the four corners of the projection rectangle to the four corners of the screen. For the ideal pose, we assume there is no rotation, and $R_{ideal}$ is set to the identity matrix. The ideal position of the projector with respect to the screen is then determined by the intrinsic parameters of the projector and the four correspondences between screen corners and projection corners. Using equation (2), we can write

$$u = \frac{f_x(X+t_x)}{t_z} + u_0$$
$$v = \frac{f_y(Y+t_y)}{t_z} + v_0, \qquad (3)$$

for focal lengths $f_x$ and $f_y$, principal point $(u_0, v_0)^T$, screen corner $(X, Y, 0)^T$, and projector pixel $(u, v)^T$. Given that the screen corner at the origin $(0, 0, 0)^T$ corresponds with pixel $(0, 0)^T$, and $(1, 0, 0)^T$ corresponds with $(1024, 0)^T$, for a 1024 resolution image.

We can write

$$\begin{cases} X = 0, u = 0 & \Rightarrow t_x = -\frac{u_0 t_z}{f_x} \\ X = 1, u = 1024 & \Rightarrow t_x = \frac{(1024 - u_0) t_z}{f_x} - 1 \end{cases} \quad (4)$$

From equation (4), we can determine t

$$t_z = f_x / 1024. \quad (5)$$

We can also determine equations (4) and (5) for Y- and v-coordinates, and focal length $f_x$. Thus, we have two equations that yield $t_z$, and because they are similar in value, we average the values to obtain the final $t_z$. Given $t_z$, we can solve for $t_x$ and ty, to obtain the values $T_{ideal}$.

Adjustment

Given the current pose of the projector, the three degrees of freedom for the rotation are taken to be the Euler angles determined from the rotation matrix R. The remaining three degrees for translation are determined from $T - T_{ideal}$. Then, the adjustment 590 is applied to the motors of the 6 DoF platform 240.

We perform the first coarse stage 500 of adjusting for several iterations. This is necessary due to several sources of error residuals. First, we have the camera intrinsic parameters residual error. Next, we have the residual error of the intrinsic parameters of the projector residual error. Another source of residual error is the projector lens distortion, even in the case when we estimated these parameters. A final source of residual error is due to the fact that the screen may not be perfectly planar.

Because the actual projection corners cannot be estimated directly with enough precision, or the corners simply cannot be directly estimated because they are outside the screen rectangle, the corners are estimated from the homographies. Due to the residual errors described above, this extrapolation process itself introduces error in the projector corner locations. Even if we perform the update step for many iterations, the final accuracy of the alignment with the screen is bound by the magnitude of the aforementioned residual errors. Therefore, we perform the coarse adjusting only for two iterations, at most.

The specific type of rear-projection tiles we use allow concurrent adjustment of the platforms of multiple tiles. This results in a speed-up compared to when each adjustment is performed sequentially. An initial misalignment may require relatively large updates in the first iterations, and thus the speed-up translates to significant time reductions during the alignment process.

Non-Parametric Accuracy Refinement

The stage 600 in the alignment process is a first non-parametric approach to refine the results obtained after the first coarse alignment stage 500. The initial and possibly large misalignment during the first stage is reduced by the second stage. The remaining misalignment can be several pixels in magnitude. When the projector is within several pixels of ideal alignment, we can make two assumptions:

1. Each degree of freedom is independent of the others; and
2. Each adjustment is approximately linear in nature.

Single Rear-Projection Tile

In the second stage as shown in Figure 6, we align the projector with the corners of the screen and with features points across the entire screen. We denote these feature points in screen coordinates as the ideal points, see Figure 3. Figure 3 shows the x, y deltas between ideal points and the current projection. In an aligned state, the features across the projection are aligned with the ideal points. We determine 610 the homography $H_{cp}$ as described above.

We can express the deltas between the ideal points and the current projector position as a linear dependence on the six degrees of freedom. In fact, each feature point on the screen gives us one such dependence, and we can formulate the problem as a linear system of equations:

$$\begin{bmatrix} \Delta x^1_{T_x} & \Delta x^1_{T_y} & \Delta x^1_{T_z} & \Delta x^1_{R_x} & \Delta x^1_{R_y} & \Delta x^1_{R_z} \\ \vdots & \vdots & \vdots & \vdots & \vdots & \vdots \\ \Delta x^n_{T_x} & \Delta x^n_{T_y} & \Delta x^n_{T_z} & \Delta x^n_{R_x} & \Delta x^n_{R_y} & \Delta x^n_{R_z} \\ \Delta y^1_{T_x} & \Delta y^1_{T_y} & \Delta y^1_{T_z} & \Delta y^1_{R_x} & \Delta y^1_{R_y} & \Delta y^1_{R_z} \\ \vdots & \vdots & \vdots & \vdots & \vdots & \vdots \\ \Delta y^n_{T_x} & \Delta y^n_{T_y} & \Delta y^n_{T_z} & \Delta y^n_{R_x} & \Delta y^n_{R_y} & \Delta y^n_{R_z} \end{bmatrix} \begin{bmatrix} T_x \\ T_y \\ T_z \\ R_x \\ R_y \\ R_z \end{bmatrix} = \begin{bmatrix} \Delta x^1 \\ \vdots \\ \Delta x^n \\ \Delta y^1 \\ \vdots \\ \Delta y^n \end{bmatrix}$$

$$\Rightarrow A \cdot x = b \Rightarrow x = A^+ \cdot b \qquad (6)$$

The deltas in the matrix A are those measured for small motor movements in each of the six degrees of freedom. The deltas in b are shown in Figure 3. We determine 620 all deltas using camera coordinates. Hence, we transform the ideal points from screen coordinates to camera coordinates using $H_{sc}$. We solve 620 A.x = b, and adjust 640 the platform motors. We test 650 to see if the desired result is achieved, if not, we check 670 the result, and accept 660 the result if true. Otherwise, we repeat 680.

Equation (6) shows that we can solve the system of linear equation by computing the pseudo-inverse of the matrix A, a 2n x 6 matrix. The pseudo-inverse requires the computation of the inverse of $A^TA$, a 6 x 6 matrix. We assume that $A^TA$ is non-singular and full rank. The pseudo-inverse could be computed instead using a singular value decomposition (SVD) to deal with rank deficiency. However, we do not expect to encounter a situation in which $A^TA$ is non-singular. The solution directly specifies the unit steps by which each six degree of freedom motor has to be adjusted.

Calibration

In principle, we could determine the deltas of the matrix A during the second stage for each rear-projection tile separately. However in practice, we "calibrate" these deltas in an off-line process for a particular model rear-projection tile. Then, we assume that all other same model rear-projection tiles approximately have similar deltas.

The calibration step requires that the rear-projection tile is approximately aligned with respect to the screen before the process starts. Then, we determine the positions of feature points, i.e., screen pixels, for this current approximately aligned state. Next, we move a single degree of freedom motor for some small number of step units, and again determine the position of the feature points. This gives us the relationship between stepping units and pixels on the screen.

The deltas between the x -coordinates and y -coordinates are stored. Next, we undo the prior move of the degree of freedom motor, re-estimate the locations of the feature points, and move another single degree of freedom motor, until all six degrees of freedom motors are calibrated. Re-estimation of feature points after each undo is necessary due to repeatability inaccuracy of the motors. We store the deltas between x- and y-coordinates, in camera coordinates.

Multiple Rear-Projectors

Equation (6) is applied to a single rear-projection tile only. Our goal is to align configurations of multiple rear-projection tiles, as shown in Figure 7. As before, we determine 710 homographies $H_{cp}$. Then, for each tile, we determine 720 deltas, determine 730 deltas with neighbors, solve 740 A.x = b, adjust motors 750. Check 760 for maximum number of iterations, and quit 770, and otherwise repeat 780 for each tile.

The alignment of multiple tiles is more difficult, because the projection of the feature pattern needs to be aligned with the screen of each tile, and with the projections on abutting screens. Another factor that makes this alignment more difficult is the fact that there is no overlap between neighboring projections. In the ideal case, the projections should agree geometrically along the seams of neighboring screens.

In our system, the screens are spaced about 1 mm apart, and the projections should compensate for this gap. To compensate for the gap, it is required that for the outermost ring of pixels, 50% of the pixel should be visible, while the other 50% extends beyond the screen boundary.

As shown in Figure 8 with this compensation, neighboring projections should abut on the centerline 800 of the 1 mm gap. If we define feature points along the outermost edges of a projection, then in the ideal case, the features would be aligned along the centerline of the 1 mm gap. Of course, we cannot actually measure these feature points directly, and instead we extrapolate using the homographies.

Feature points are extrapolated along the 4-connected neighbor seams, provided that there is an actual neighbor. After the feature points are known, we can express the misalignment yet again as a delta between the feature points, as shown in Figure 4.

Equation (7) contains Equation (6), with additional rows for the left(1), right(r), top(t) and bottom(b) neighbors.

$$\begin{bmatrix} \Delta x^1_{T_x} & \Delta x^1_{T_y} & \Delta x^1_{T_z} & \Delta x^1_{R_x} & \Delta x^1_{R_y} & \Delta x^1_{R_z} \\ \vdots & \vdots & \vdots & \vdots & \vdots & \vdots \\ \Delta x^n_{T_x} & \Delta x^n_{T_y} & \Delta x^n_{T_z} & \Delta x^n_{R_x} & \Delta x^n_{R_y} & \Delta x^n_{R_z} \\ \Delta x^l_{T_x} & \Delta x^l_{T_y} & \Delta x^l_{T_z} & \Delta x^l_{R_x} & \Delta x^l_{R_y} & \Delta x^l_{R_z} \\ \Delta x^r_{T_x} & \Delta x^r_{T_y} & \Delta x^r_{T_z} & \Delta x^r_{R_x} & \Delta x^r_{R_y} & \Delta x^r_{R_z} \\ \Delta x^t_{T_x} & \Delta x^t_{T_y} & \Delta x^t_{T_z} & \Delta x^t_{R_x} & \Delta x^t_{R_y} & \Delta x^t_{R_z} \\ \Delta x^b_{T_x} & \Delta x^b_{T_y} & \Delta x^b_{T_z} & \Delta x^b_{R_x} & \Delta x^b_{R_y} & \Delta x^b_{R_z} \\ \Delta y^1_{T_x} & \Delta y^1_{T_y} & \Delta y^1_{T_z} & \Delta y^1_{R_x} & \Delta y^1_{R_y} & \Delta y^1_{R_z} \\ \vdots & \vdots & \vdots & \vdots & \vdots & \vdots \\ \Delta y^n_{T_x} & \Delta y^n_{T_y} & \Delta y^n_{T_z} & \Delta y^n_{R_x} & \Delta y^n_{R_y} & \Delta y^n_{R_z} \\ \Delta y^l_{T_x} & \Delta y^l_{T_y} & \Delta y^l_{T_z} & \Delta y^l_{R_x} & \Delta y^l_{R_y} & \Delta y^l_{R_z} \\ \Delta y^r_{T_x} & \Delta y^r_{T_y} & \Delta y^r_{T_z} & \Delta y^r_{R_x} & \Delta y^r_{R_y} & \Delta y^r_{R_z} \\ \Delta y^t_{T_x} & \Delta y^t_{T_y} & \Delta y^t_{T_z} & \Delta y^t_{R_x} & \Delta y^t_{R_y} & \Delta y^t_{R_z} \\ \Delta y^b_{T_x} & \Delta y^b_{T_y} & \Delta y^b_{T_z} & \Delta y^b_{R_x} & \Delta y^b_{R_y} & \Delta y^b_{R_z} \end{bmatrix} \cdot x = \begin{bmatrix} \Delta x^1 \\ \vdots \\ \Delta x^n \\ \Delta^l_x \\ \Delta^r_x \\ \Delta^t_x \\ \Delta^b_x \\ \Delta y^1 \\ \vdots \\ \Delta y^n \\ \Delta^l_y \\ \Delta^r_y \\ \Delta^t_y \\ \Delta^b_y \end{bmatrix} \qquad (7)$$

A solution 630 to this system of linear equations is $A^+.b$. By encapsulating Equation (6) in Equation (7), we ensure that each rear-projection tile maintains alignment with its screen, while aligning to neighboring tiles.

With the alignment problem between neighboring tiles formulated as a linear system in equation (7), we can apply a weighting scheme. The weights influence the least squares solution given by the linear equations $A^+.b$. The weighting scheme can either give more importance to the feature points of the individual tile, or instead more importance to the feature points along the seams with one, or more, neighboring tiles. More importance to the feature points of the individual tile maintains alignment with the screen of the individual tile, but not necessarily alignment with neighboring tiles. More importance to the features along the seams of one or more neighboring tiles results in alignment between neighboring tiles, but not necessarily maintain alignment to the screen of the individual tile. Equation (7) shows the case in which both features of the individual tiles as well as features along the seams with neighboring tiles have equal weights (with value 1).

Compensation for Non-Linear Distortion

All the above computations are accurate only when there are almost, or no non-linear distortions present in the system. As described above, this is certainly not the case here. Several different sources contribute to an overall non-linear distortion. Extrapolating and interpolating feature locations using homographies in the presence of non-linear distortions can lead to large errors. The ideal points across the screen are interpolated based on the homography $H_{sc}$, whereas the feature points along the seams between neighboring tiles are extrapolated based on the homographies $H_{cp}$. Because the solutions of Equations (6) and (7).are computed in a least squares sense, the best possible alignment has therefore a reduced accuracy.

Because the non-linear distortion is a composition of distortions from several different sources, and it is impossible to observe each one in isolation, we try to estimate the total non-linear distortion. In order to capture the complex form of the distortion, we estimate a bi-variable polynomial $f_{poly}$ of degree 3 using the following model:

$$x' = a_1 + a_2x + a_3y + a_4xy + a_5x^2 + a_6y^2 + a_7x^2y + a_8xy^2 + a_9x^2y^2 + a_{10}x^3 + a_{11}y^3 + a_{12}x^3y + a_{13}xy^3 + a_{14}x^3y^2 + a_{15}x^2y^3 + a_{16}x^3y^3 \quad . \quad (8)$$

We estimate a similar polynomial for y'. Again, we can compute the polynomial parameters in the least squares sense. Given the polynomials, we can compute the ideal points in camera coordinates as:

$$\tilde{x}_c = \rho(H_{s,c} \cdot x_s)$$

$$x_c = f_{poly}(\tilde{x}_c) \quad ,$$

where p() is a projective divide operator. Rather than estimating $f_{poly}$ only once for x and y , we estimate $f_{poly}$ for each iteration. The reasoning is that as we get closer to ideal alignment, the estimate for $f_{poly}$ improves.

Adjustment

The non-parametric fine refinement stage is performed for several iterations. Although the alignment does not converge to an absolute global minimum, repeated tests show that after eight iterations, the RMS error reaches an error floor. Thus, we perform the non-parametric refinement step up to eight iterations, and terminate early if the error floor is reached in fewer iterations.

**Claims**

**1.** A method for aligning an array (110) of projectors (220), comprising:

performing independently a parametric coarse alignment (500) for each projector by

a) determining the intrinsic parameters Ap of the projector;
b) determining a homography $H_{cs}$ between a camera and a screen;
c) determining a homography $H_{pc}$ between the projector and the camera;
d) determining a homography $H_{sp}$ between the screen and the projector according to $H^{-1}{}_{pc}$ X $H_{sc}$;
e) testing to see if the homography $H_{sp}$ achieves the desired precision; and
f) when the desired precision is not achieved, decomposing the homography $H_{sp}$ with an inverse matrix $A^{-1}{}_p$ of intrinsic parameters of the projector to obtain a rotation matrix R, and a translation matrix T; and adjusting the pose of the projector accordingly, and repeating steps c)-f) iteratively until a maximum number of iterations is reached;

and thereafter
performing jointly a non-parametric fine alignment (700) for each projector and adjacent projectors by

g) aligning the projector with the corners of the screen and with features points across the entire screen to determine a homography $H_{cp}$ between the camera and the projector;
h) formulating deltas between the ideal points and the current projector position using camera coordinates as a linear system of equations;
i) solving the linear system of equations;
j) adjusting the pose of the projector; and
k) when the desired precision is not achieved, performing a repetition of steps g) -h) until a maximum number of iterations is reached;

wherein the alignments are performed by adjusting the poses of the projectors.

**2.** The method of claim 1, further comprising:

projecting an alignment pattern on a screen (210) of each projector (220) while performing the alignments; and acquiring images of the alignment patterns while performing the alignments with a camera.

**3.** The method of claim 2, wherein independently performing the parametric coarse alignment comprises the steps of:

determining, from the images, a current pose of each projector with respect to the screen of the projector;
determining a difference between the current pose and an ideal pose of each projector; and
adjusting (590) the pose of each projector according to the difference.

**4.** The method of claim 1, in which the projectors are front projectors.

**5.** The method of claim 3, in which each projector (220) is mounted on a six degree of freedom platform (240) with motors for adjusting the pose of the projector according to stepping units of the motors.

**6.** The method of claim 1, in which the intrinsic parameters of the projector are determined by moving the projector (220) to at least three different poses with respect to the screen (210) .

**7.** The method of claim 6, further comprising:

determining an ideal pose of the projector pose with respect to the screen (210) based on the intrinsic parameters.

**8.** The method of claim 3, in which the adjusting of the projectors (220) is done concurrently.

**9.** The method of claim 5, further comprising:

determining a relationship between the stepping units and pixels on the screen.

**10.** The method of claim 1, further comprising:

estimating a non-linear distortion of the projectors (220) while performing the alignments.

**11.** The method of claim 1, comprising:

performing independently the parametric coarse alignment (500) for each projector; and then performing independently a non-parametric fine alignment (600) for each projector before performing jointly the non-parametric fine alignment (700) for each projector and adjacent projectors.

**12.** A system for aligning an array (110) of projectors (220), comprising:

means for performing independently a parametric coarse alignment (500) for each projector by

a) determining the intrinsic parameters $A_p$ of the projector;
b) determining a homography $H_{cs}$ between a camera and a screen;
c) determining a homography $H_{pc}$ between the projector and the camera;
d) determining a homography $H_{sp}$ between the screen and the projector according to $H^{-1}_{pc}$ X $H_{sc}$;
e) testing to see if the homography $H_{sp}$ achieves the desired precision; and

f) when the desired precision is not achieved, decomposing the homography $H_{sp}$ with an inverse matrix $A^{-1}_p$ of intrinsic parameters of the projector to obtain a rotation matrix R, and a translation matrix T; and adjusting the pose of the projector accordingly, and repeating steps c) -f) iteratirety until a maximum number of iterations is reached;

and
means for performing jointly a non-parametric fine alignment (700) for each projector and adjacent projectors by

g) aligning the projector with the corners of the screen and with features points across the entire screen to determine a homography $H_{cp}$ between the camera and the projector;
h) formulating deltas between the ideal points and the current projector position using camera coordinates as a linear system of equations;
i) solving the linear system of equations;
j) adjusting the pose of the projector; and
k) when the desired precision is not achieved, performing a repetition of steps g) -h) until a maximum number of iterations is reached;

wherein the system is adapted to perform the alignment by adjusting the poses of the projectors and to perform the parametric coarse alignment prior to the non-parametric fine alignment.

**13.** The system of claim 12, further comprising:

means for performing independently a non-parametric fine alignment (600) for each projector,
wherein the system is adapted to first perform independently the parametric coarse alignment (500), to then perform independently the non-parametric fine alignment (600) for each projector, and to finally perform jointly the non-parametric fine alignment (700) for each projector and adjacent projectors.

**14.** The system of claims 12, in which an alignment pattern is projected on a screen of each projector while performing the alignments, and a camera acquires input impages of the alignment patterns while performing the alignments.

**15.** The system of claim 12, in which the adjusting of the projectors is done concurrently.

**16.** The system of claim 12, in which the non-parametric fine alignment for each projector and adjacent projectors is according to a weighting scheme.

**17.** The system of claim 14, in which the input images are acquired by multiple cameras.

**18.** The system of claim 14, in which the acquired alignment patterns are used to determine a weighting scheme.

## Patentansprüche

**1.** Ein Verfahren zum Ausrichten einer Anordnung (110) von Projektoren (220), umfassend:

ein unabhängiges Durchführen einer parametrischen Grobausrichtung (500) für jeden Projektor durch

a) Bestimmen der intrinsischen Parameter Ap des Projektors;
b) Bestimmen einer Homographie $H_{cs}$ zwischen einer Kamera und einer Projektionsfläche;
c) Bestimmen einer Homographie $H_{pc}$ zwischen dem Projektor und der Kamera;
d) Bestimmen einer Homographie $H_{sp}$ zwischen der Projektionsfläche und dem Projektor gemäß $H^{-1}_{pc} \times H_{sc}$;
e) Testen um festzustellen, ob die Homographie $H_{sp}$ die gewünschte Präzision erreicht; und,
f) wenn die gewünschte Präzision nicht erreicht wird, Zerlegen der Homographie $H_{sp}$ mit einer inversen Matrix $A^{-1}_p$ von intrinsischen Parametern des Projektors um eine Rotationsmatrix R und eine Translationsmatrix T zu erhalten; und Abgleichen der Pose des Projektors entsprechend, und Wiederholen der Schritte c) bis f) iterativ bis eine maximale Anzahl von Iterationen erreicht ist;

und danach ein gemeinsames Durchführen einer nicht-parametrischen Feinausrichtung (700) für jeden Projektor und benachbarte Projektoren durch

g) Ausrichten des Projektors mit den Ecken der Projektionsfläche und mit Merkmalspunkten über die gesamte Projektionsfläche um eine Homographie $H_{cp}$ zwischen der Kamera und dem Projektor zu bestimmen;
h) Formulieren von Deltas zwischen den idealen Punkten und der gegenwärtigen Projektorposition unter Verwendung von Kamerakoordinaten als ein lineares System von Gleichungen;
i) Lösen des linearen Systems von Gleichungen;
j) Abgleichen der Pose des Projektors; und,
k) wenn die gewünschte Präzision nicht erreicht wird, Durchführen einer Wiederholung der Schritte g) bis k) bis eine maximale Anzahl von Iterationen erreicht ist;

wobei die Ausrichtungen durch Abgleichen der Posen der Projektoren durchgeführt werden.

**2.** Das Verfahren nach Anspruch 1, darüberhinaus umfassend:

ein Projizieren eines Ausrichtungsmusters auf eine Projektionsfläche (210) von jedem Projektor (220) während des Durchführens der Ausrichtungen; und
ein Erlangen von Bildern des Ausrichtungsmusters während des Durchführens der Ausrichtungen mit einer Kamera.

**3.** Das Verfahren nach Anspruch 2, wobei das unabhängige Durchführen der parametrischen Grobausrichtung die folgenden Schritte umfasst:

Bestimmen, aus den Bildern, einer gegenwärtigen Pose von jedem Projektor mit Bezug auf die Projektionsfläche des Projektors;
Bestimmen eines Unterschieds zwischen der gegenwärtigen Pose und einer idealen Pose von jedem Projektor; und
Abgleichen (590) der Pose jedes Projektors in Übereinstimmung mit dem Unterschied.

**4.** Das Verfahren nach Anspruch 1, bei dem die Projektoren Frontprojektoren sind.

**5.** Das Verfahren nach Anspruch 3, bei dem jeder Projektor (220) auf einem Podest (240) mit sechs Freiheitsgraden mit Motoren zum Abgleichen der Pose des Projektors in Übereinstimmung mit Schritteinheiten der Motoren angebracht wird.

**6.** Das Verfahren nach Anspruch 1, bei dem die intrinsischen Parameter des Projektors durch ein Bewegen des Projektors (220) in mindestens drei verschiedene Posen mit Bezug auf die Projektionsfläche (210) bestimmt werden.

**7.** Das Verfahren nach Anspruch 6, darüberhinaus umfassend:

ein Bestimmen einer idealen Pose der Projektorpose mit Bezug auf die Projektionsfläche (210) basierend auf den intrinsischen Parametern.

**8.** Das Verfahren nach Anspruch 3, bei dem das Abgleichen der Projektoren (220) gleichzeitig durchgeführt wird.

**9.** Das Verfahren nach Anspruch 5, darüberhinaus umfassend:

ein Bestimmen einer Beziehung zwischen den Schritteinheiten und Pixeln auf der Projektionsfläche.

**10.** Das Verfahren nach Anspruch 1, darüberhinaus umfassend:

ein Einschätzen einer nicht-linearen Verzeichnung der Projektoren (220) während die Ausrichtungen durchgeführt werden.

**11.** Das Verfahren nach Anspruch 1, umfassend:

ein unabhängiges Durchführen der parametrischen Grobausrichtung (500) für jeden Projektor; und
dann ein unabhängiges Durchführen einer nicht-parametrischen Feinausrichtung (600) für jeden Projektor, bevor gemeinsam die nicht-parametrische Feinausrichtung (700) für jeden Projektor und benachbarte Projektoren durchgeführt wird.

**12.** Ein System zum Ausrichten einer Anordnung (110) von Projektoren. (220) umfassend:

Mittel zum unabhängigen Durchführen einer parametrischen Grobausrichtung (500) für jeden Projektor durch

a) Bestimmen der intrinsischen Parameter Ap des Projektors;
b) Bestimmen einer Homographie $H_{cs}$ zwischen einer Kamera und einer Projektionsfläche;
c) Bestimmen einer Homographie $H_{pc}$ zwischen dem Projektor und der Kamera;
d) Bestimmen einer Homographie $H_{sp}$ zwischen der Projektionsfläche und dem Projektor gemäß $H^{-1}_{pc} \times H_{sc}$;
e) Testen um zu sehen, ob die Homographie $H_{sp}$ die gewünschte Präzision erreicht; und,
f) wenn die gewünschte Präzision nicht erreicht wird, Zerlegen der Homographie $H_{sp}$ mit einer inversen Matrix $A^{-1}_{p}$ von intrinsischen Parametern des Projektors, um eine Rotationsmatrix R und eine Translationsmatrix T zu erhalten; und Abgleichen der Pose des Projektors entsprechend, und Wiederholen der Schritte c) bis f) iterativ bis eine maximale Anzahl von Iterationen erreicht ist;

und
Mittel zum gemeinsamen Durchführen einer nicht-parametrischen Feinausrichtung (700) für jeden Projektor und benachbarte Projektoren durch

g) Ausrichten des Projektors mit den Ecken der Projektionsfläche und mit Merkmalspunkten über die gesamte.Projektionsfläche zum Bestimmen einer Homographie $H_{cp}$ zwischen der Kamera und dem Projektor;
h) Formulieren von Deltas zwischen den idealen Punkten und der gegenwärtigen Projektorposition unter Verwendung von Kamerakoordinaten als ein lineares System von Gleichungen;
i) Lösen des linearen Systems von Gleichungen;
j) Abgleichen der Pose des Projektors; und,
k) wenn die gewünschte Präzision nicht erreicht wird, Durchführen einer Wiederholung der Schritte g) bis k) bis eine maximale Anzahl von Iterationen erreicht ist;

wobei das System ausgebildet ist zum Durchführen der Ausrichtung durch Abgleichen der Posen der Projektoren und zum Durchführen der parametrischen Grobausrichtung vor der nicht-parametrischen Feinausrichtung.

**13.** Das System nach Anspruch 12, darüberhinaus umfassend:

Mittel zum unabhängigen Durchführen einer nicht-parametrischen Feinausrichtung (600) für jeden Projektor, wobei das System dazu ausgebildet ist, zunächst unabhängig die parametrische Grobausrichtung (500) durchzuführen, dann unabhängig die nicht-parametrische Feinausrichtung (600) für jeden Projektor durchzuführen und schließlich gemeinsam die nicht-parametrische Feinausrichtung (700) für jeden Projektor und benachbarte Projektoren durchzuführen.

**14.** Das System nach Anspruch 12, bei dem während des Durchführens der Ausrichtungen ein Ausrichtungsmuster auf eine Projektionsfläche von jedem Projektor projiziert ist, und eine Kamera Eingabebilder des Ausrichtungsmusters während des Durchführens der Ausrichtungen erlangt.

**15.** Das System nach Anspruch 12, bei dem das Abgleichen der Projektoren gleichzeitig gemacht wird.

**16.** Das System nach Anspruch 12, bei dem die nicht-parametrische Feinausrichtung für jeden Projektor und benachbarte Projektoren gemäß eines Gewichtungsschemas ist.

**17.** Das System nach Anspruch 14, bei dem die Eingabebilder durch mehrere Kameras erlangt werden.

**18.** Das System nach Anspruch 14, bei dem die erlangten Ausrichtungsmuster dazu verwendet werden, ein Gewichtungsschema zu bestimmen.

## Revendications

**1.** Procédé destiné à aligner un ensemble (110) de projecteurs (220), comprenant les étapes consistant à :

exécuter de manière indépendante un alignement grossier paramétrique (500) de chaque projecteur à l'aide des étapes consistant à :

a) déterminer les paramètres intrinsèques $A_p$ du projecteur ;
b) déterminer une homographie $H_{cs}$ entre une caméra et un écran ;
c) déterminer une homographie $H_{pc}$ entre le projecteur et la caméra ;
d) déterminer une homographie $H_{sp}$ entre l'écran et le projecteur selon $H^{-1}_{pc} \times {}_{sc}$ ;
e) exécuter un essai de façon à savoir si l'homographie $H_{sp}$ permet d'obtenir la précision souhaitée ; et
f) lorsque la précision souhaitée n'est pas obtenue, décomposer l'homographie $H_{sp}$ avec une matrice inverse $A^{-1}_p$ des paramètres intrinsèques du projecteur de façon à obtenir une matrice de rotation R, et une matrice de translation T ; et régler la pose du projecteur en conséquence, et répéter les étapes c) - f) de manière itérative jusqu'à ce qu'un nombre maximum d'itérations soit atteint ;

et ensuite :

exécuter conjointement un alignement fin non paramétrique (700) de chaque projecteur et des projecteurs adjacents à l'aide des étapes consistant à :

g) aligner le projecteur avec les coins de l'écran et avec des points caractéristiques à travers tout l'écran de façon à déterminer une homographie $H_{cp}$ entre la caméra et le projecteur ;
h) formuler les différences entre les points idéaux et la position actuelle du projecteur en utilisant des coordonnées de caméra en tant que système d'équations linéaires ;
i) résoudre le système d'équations linéaires ;
j) régler la pose du projecteur ; et
k) lorsque la précision désirée n'est pas obtenue, exécuter une répétition des étapes g) - h) jusqu'à ce qu'un nombre maximum d'itérations soit atteint ;

dans lequel les alignements sont exécutés en réglant les poses des projecteurs.

**2.** Procédé selon la revendication 1, comprenant en outre les étapes consistant à:

projeter un motif d'alignement sur un écran (210) de chaque projecteur (220) tout en exécutant les alignements ; et
acquérir les images des motifs d'alignement tout en exécutant les alignements avec une caméra.

**3.** Procédé selon la revendication 2, dans lequel l'étape consistant à exécuter de manière indépendante un alignement grossier paramétrique comprend les étapes consistant à :

déterminer, à partir des images, une pose actuelle de chaque projecteur par rapport à l'écran du projecteur ;
déterminer la différence entre la pose actuel et une pose idéale de chaque projecteur ; et
régler (590) la pose de chaque projecteur selon la différence.

**4.** Procédé selon la revendication 1, dans lequel les projecteurs sont des projecteurs frontaux.

**5.** Procédé selon la revendication 3, dans lequel chaque projecteur (220) est monté sur une plate-forme à six degrés de liberté (240) avec des moteurs destinés à régler la pose du projecteur selon des unités de progression pas à pas des moteurs.

**6.** Procédé selon la revendication 1, dans lequel les paramètres intrinsèques du projecteur sont déterminés en déplaçant le projecteur (220) vers trois poses différentes au moins par rapport à l'écran (210).

**7.** Procédé selon la revendication 6, comprenant en outre une étape consistant à :

déterminer une pose idéale de la pose du projecteur par rapport à l'écran (210) sur la base des paramètres intrinsèques.

**8.** Procédé selon la revendication 3, dans lequel le réglage des projecteurs (220) est exécuté de manière simultanée.

**9.** Procédé selon la revendication 5, comprenant en outre une étape consistant à :

déterminer une relation entre les unités de progression pas à pas et les pixels sur l'écran.

**10.** Procédé selon la revendication 1, comprenant en outre une étape consistant à:

estimer une distorsion non linéaire des projecteurs (220) tout en exécutant les alignements.

**11.** Procédé selon la revendication 1, comprenant en outre les étapes consistant à :

exécuter de manière indépendante l'alignement grossier paramétrique (500) de chaque projecteur ; et ensuite :

exécuter de manière indépendante un alignement fin non paramétrique (600) de chaque projecteur avant d'exécuter conjointement l'alignement fin non paramétrique (700) de chaque projecteur et des projecteurs adjacents.

**12.** Système destiné à aligner un ensemble (110) de projecteurs (220), comprenant :

des moyens destinés à exécuter de manière indépendante un alignement grossier paramétrique (500) de chaque projecteur à l'aide des étapes consistant à :

a) déterminer les paramètres intrinsèques $A_p$ du projecteur ;
b) déterminer une homographie $H_{cs}$ entre une caméra et un écran ;
c) déterminer une homographie $H_{pc}$ entre le projecteur et la caméra ;
d) déterminer une homographie $H_{sp}$ entre l'écran et le projecteur selon $H^{-1}{}_{pc} \times H_{sc}$ ;
e) exécuter un essai de façon à savoir si l'homographie $H_{sp}$ permet d'obtenir la précision souhaitée ; et
f) lorsque la précision souhaitée n'est pas obtenue, décomposer l'homographie $H_{sp}$ avec une matrice inverse $A^{-1}{}_p$ des paramètres intrinsèques du projecteur de façon à obtenir une matrice de rotation R, et une matrice de translation T ; et régler la pose du projecteur en conséquence, et répéter les étapes c) - f) de manière itérative jusqu'à ce qu'un nombre maximum d'itérations soit atteint ; et

des moyens destinés à exécuter conjointement un alignement fin non paramétrique (700) de chaque projecteur et des projecteurs adjacents à l'aide des étapes consistant à :

g) aligner le projecteur avec les coins de l'écran et avec des points caractéristiques à travers tout l'écran de façon à déterminer une homographie $H_{cp}$ entre la caméra et le projecteur ;
h) formuler les différences entre les points idéaux et la position actuelle du projecteur en utilisant des coordonnées de caméra en tant que système d'équations linéaire ;
i) résoudre le système d'équations linéaires ;
j) régler la pose du projecteur ; et
k) lorsque la précision désirée n'est pas obtenue, exécuter une répétition des étapes g) - h) jusqu'à ce qu'un nombre maximum d'itérations soit atteint ;

dans lequel le système est adapté de façon à exécuter l'alignement en réglant les poses des projecteurs et à exécuter l'alignement grossier paramétrique avant l'alignement fin non paramétrique.

**13.** Système selon la revendication 12, comprenant en outre :

des moyens destinés à exécuter de manière indépendante un alignement fin non paramétrique (600) de chaque projecteur ;
dans lequel le système est adapté de façon à : exécuter d'abord de manière indépendante l'alignement grossier paramétrique (500) ; exécuter ensuite de manière indépendante l'alignement fin non paramétrique (600) de chaque projecteur ; et exécuter enfin conjointement l'alignement fin non paramétrique (700) de chaque projecteur et des projecteurs adjacents.

**14.** Système selon la revendication 12, dans lequel un motif d'alignement est projeté sur un écran de chaque projecteur tout en exécutant les alignements, et une caméra acquiert des images d'entrée des motifs d'alignement tout en exécutant les alignements.

**15.** Système selon la revendication 12, dans lequel le réglage des projecteurs est exécuté de manière simultanée.

**16.** Système selon la revendication 12, dans lequel l'alignement fin non paramétrique de chaque projecteur et des projecteurs adjacents est exécuté selon un système de pondération.

**17.** Système selon la revendication 14, dans lequel les images d'entrée sont acquises par de multiples caméras.

**18.** Système selon la revendication 14, dans lequel les motifs d'alignement acquis sont utilisés de façon à déterminer un système de pondération.

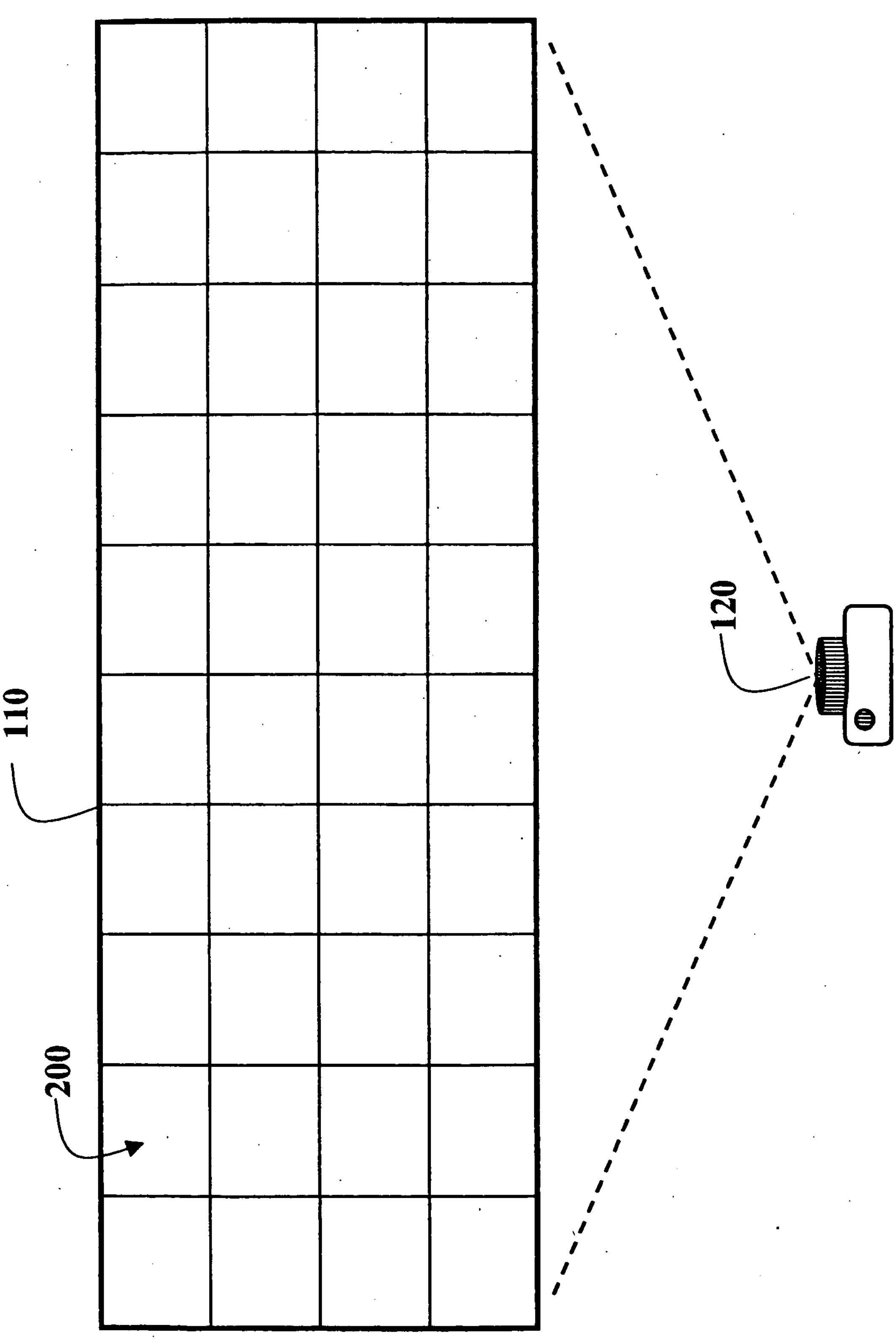


*Fig. 1*

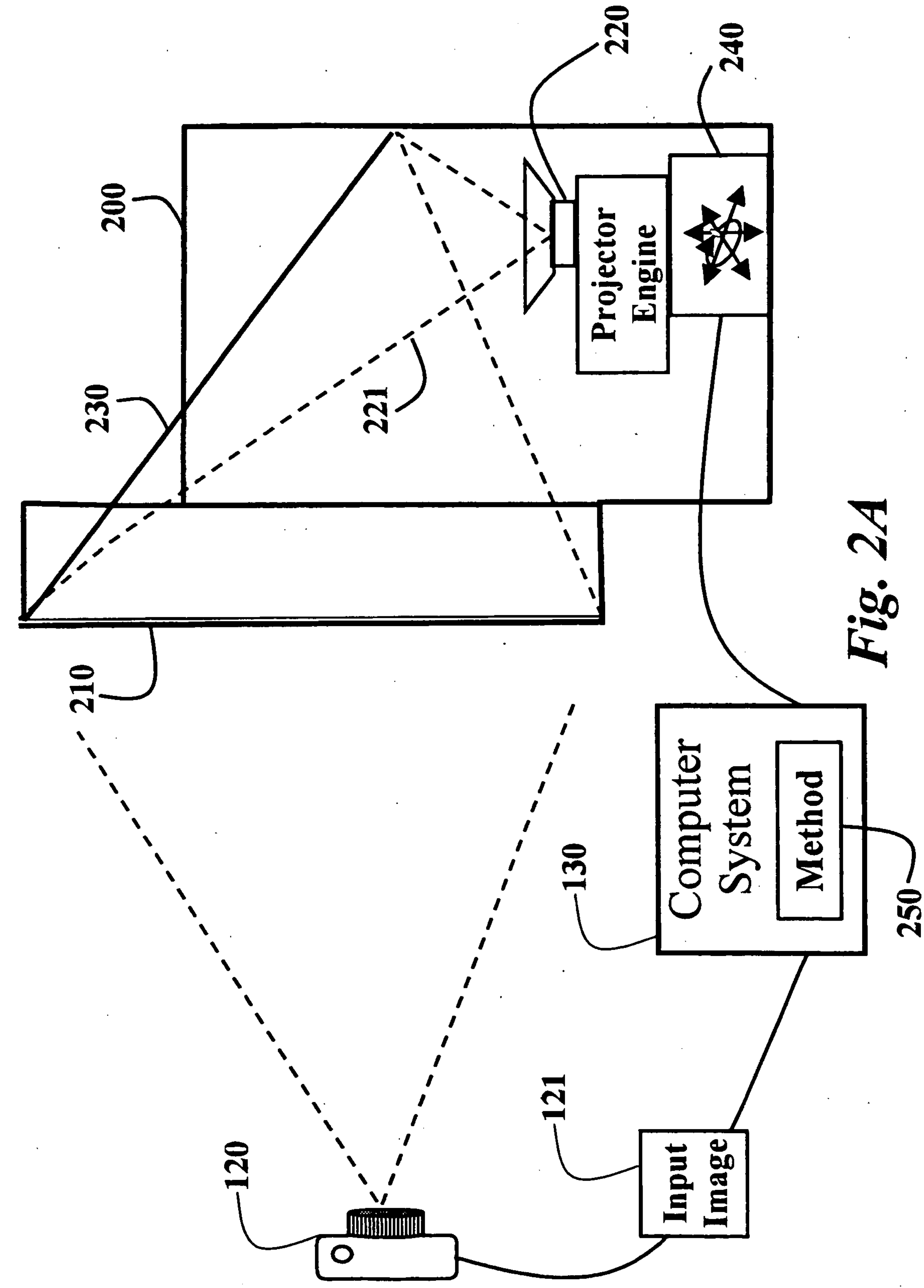
220
240
200
Projector
Engine
230
221
210
Computer
System
Method
130
250
121
Input
Image
120

*Fig. 2A*

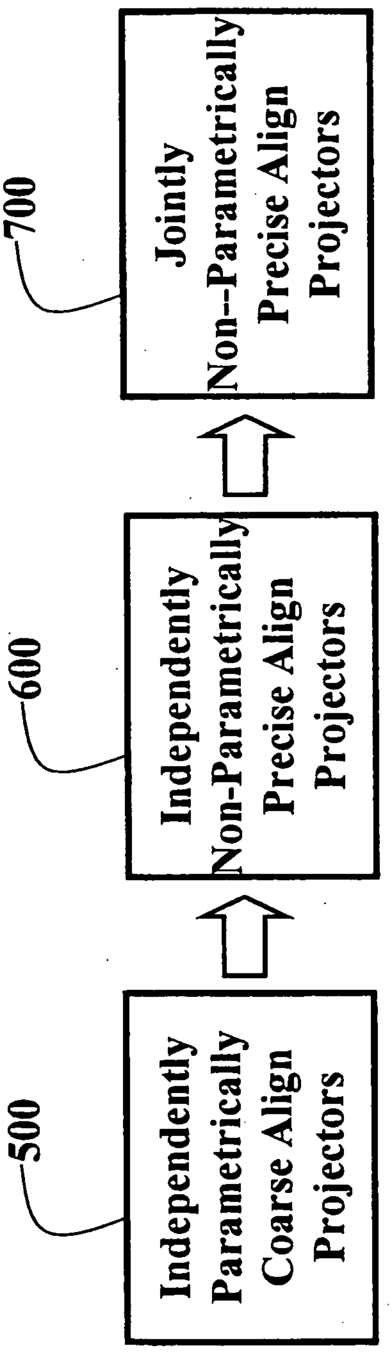
500
Independently
Parametrically
Coarse Align
Projectors
600
Independently
Non-Parametrically
Precise Align
Projectors
700
Jointly
Non--Parametrically
Precise Align
Projectors

*Fig. 2B*

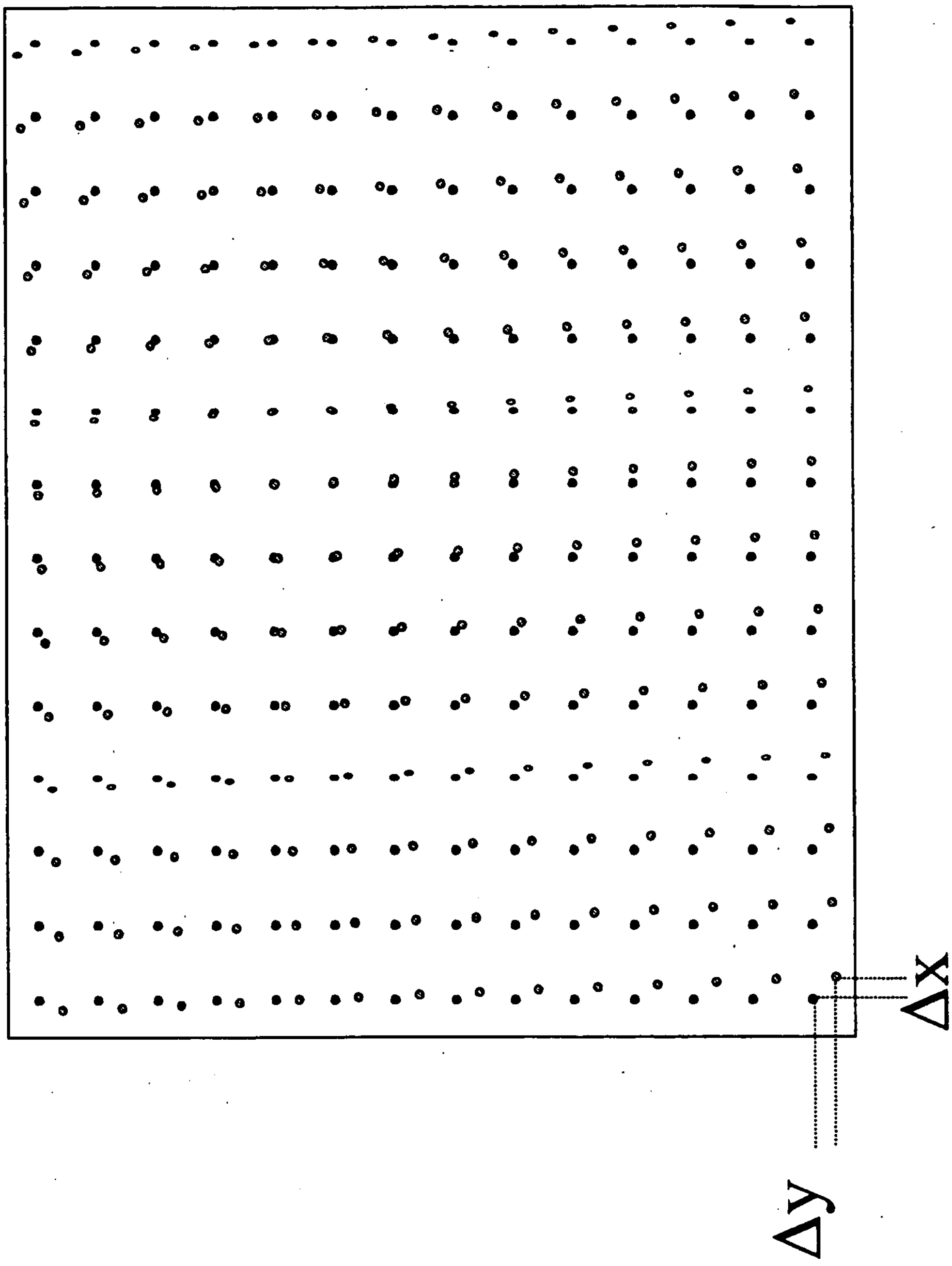


Fig. 3

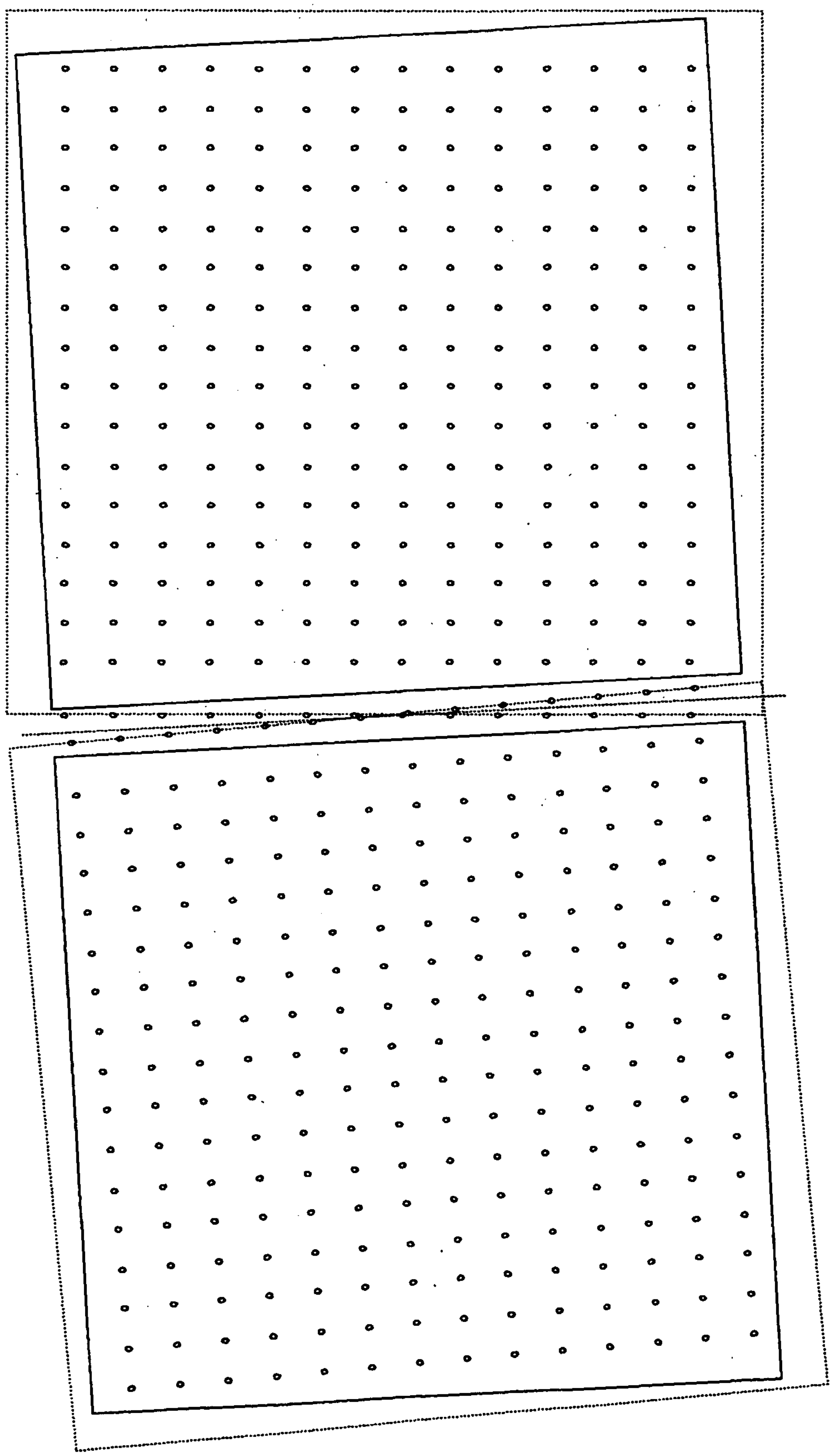

Fig. 4

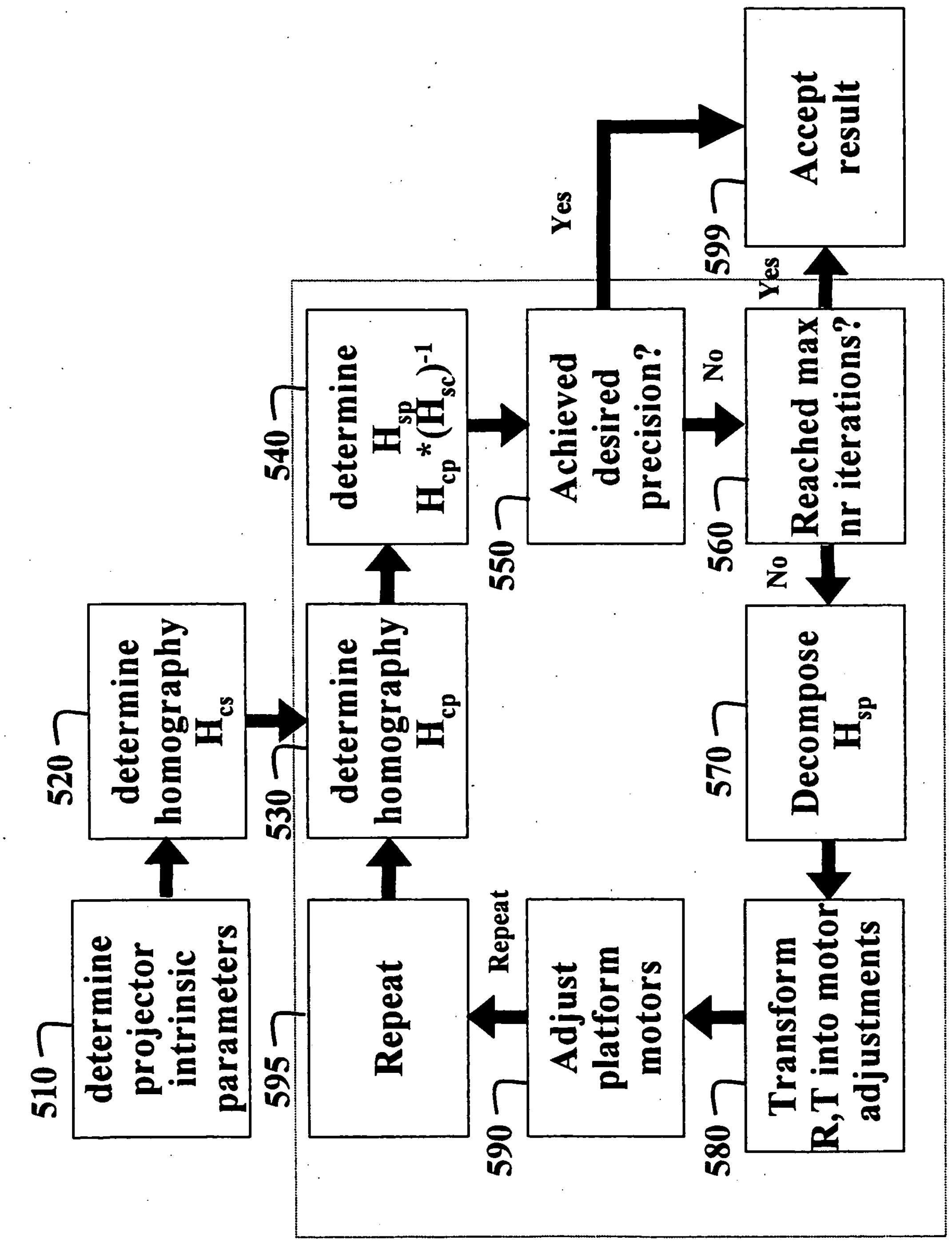
510
determine projector intrinsic parameters
520
determine homography $H_{cs}$
530
determine homography $H_{cp}$
540
determine $H_{sp}$ $H_{cp}*(H_{sc})^{-1}$
550
Achieved desired precision?
Yes
No
599
Accept result
560
Reached max nr iterations?
Yes
No
570
Decompose $H_{sp}$
580
Transform R,T into motor adjustments
590
Adjust platform motors
Repeat
595
Repeat

*Fig. 5*
500

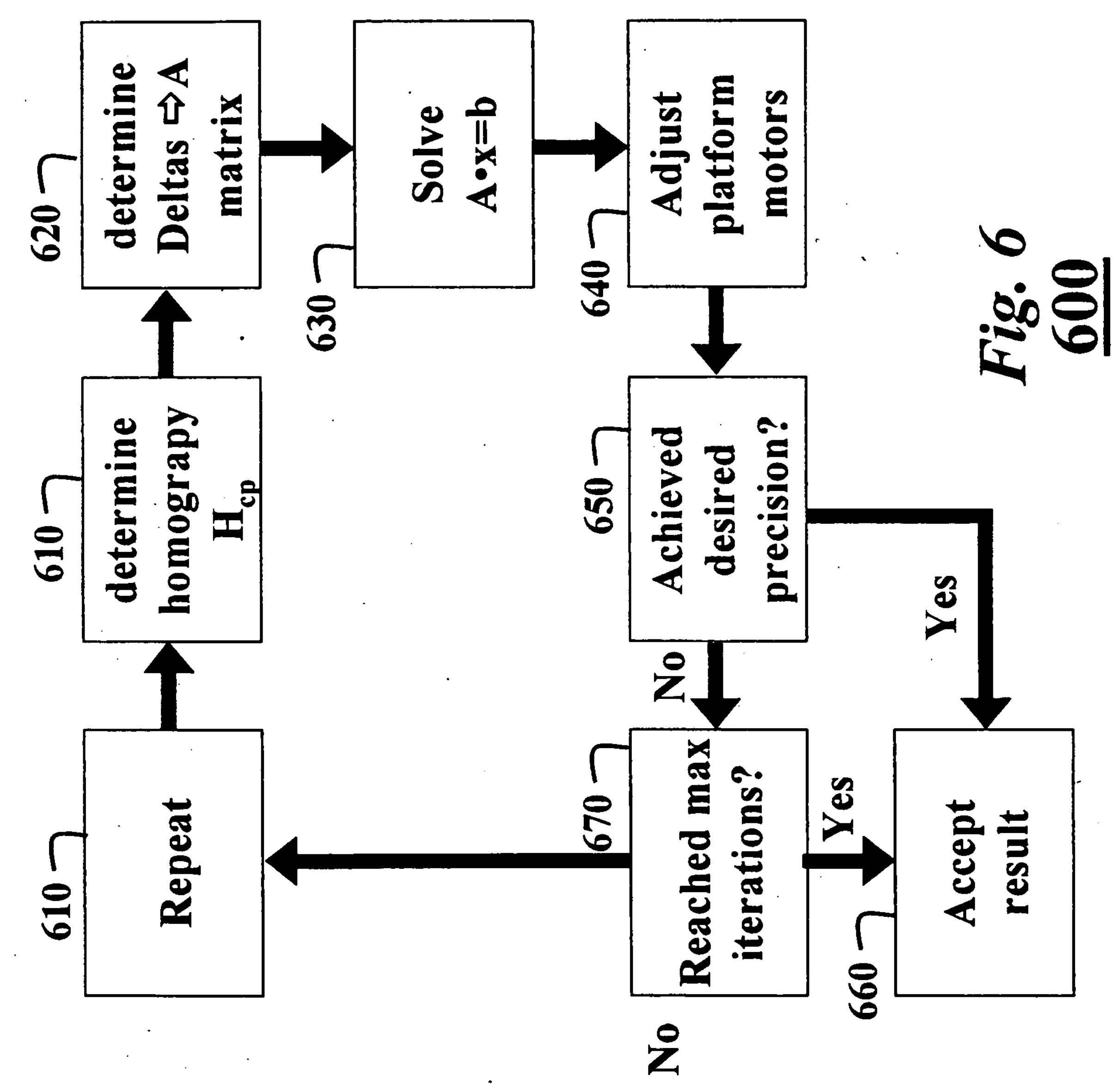
610
Repeat
610
determine homograpy $H_{cp}$
620
determine Deltas ⇨ A matrix
630
Solve A•x=b
640
Adjust platform motors
650
Achieved desired precision?
Yes
No
670
Reached max iterations?
Yes
No
660
Accept result

*Fig. 6*
600

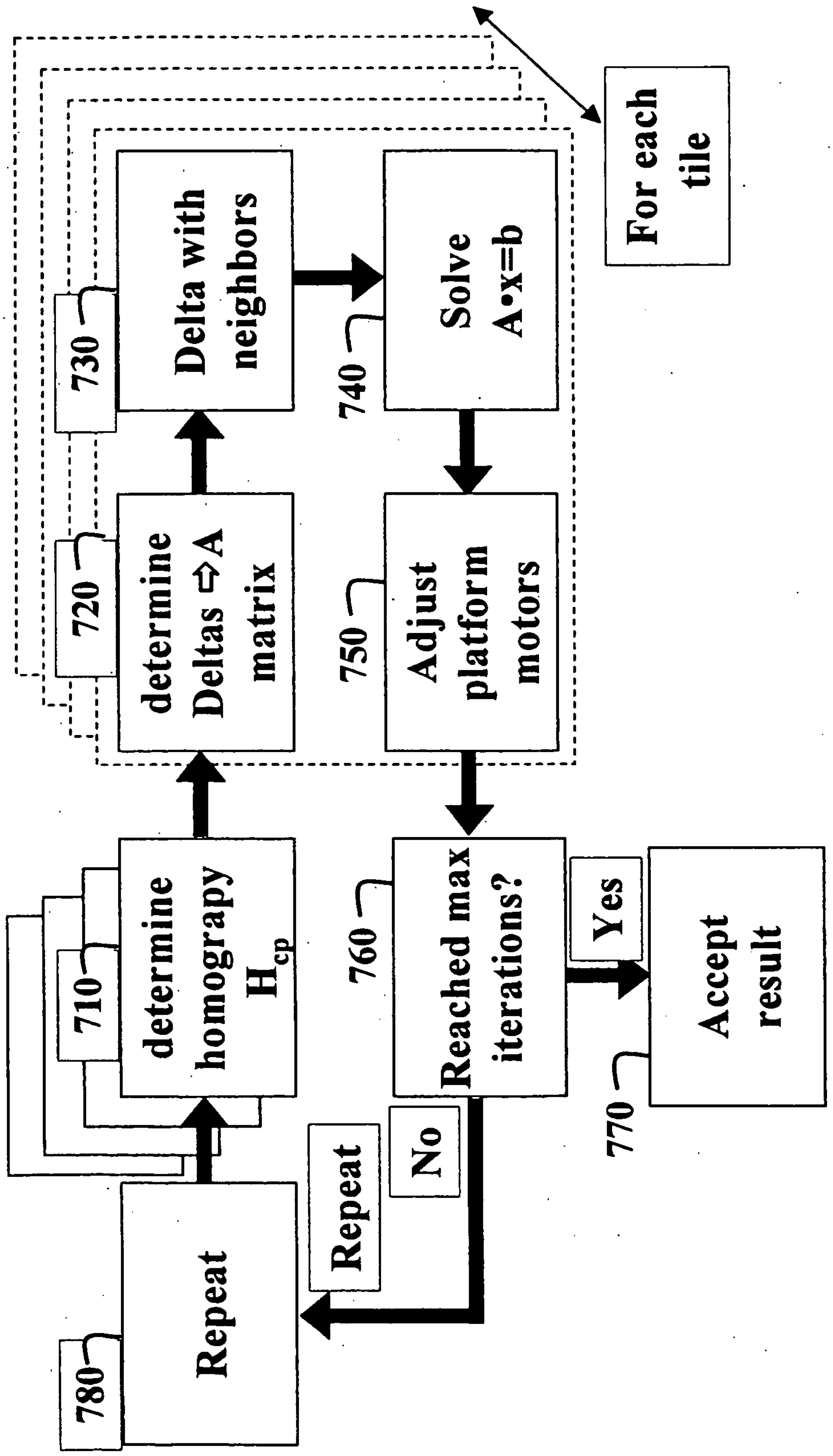
For each tile
730
Delta with neighbors
740
Solve A•x=b
720
determine Deltas ⇨ A matrix
750
Adjust platform motors
710
determine homography $H_{cp}$
760
Reached max iterations?
Yes
770
Accept result
No
Repeat
780
Repeat

*Fig. 7*
700

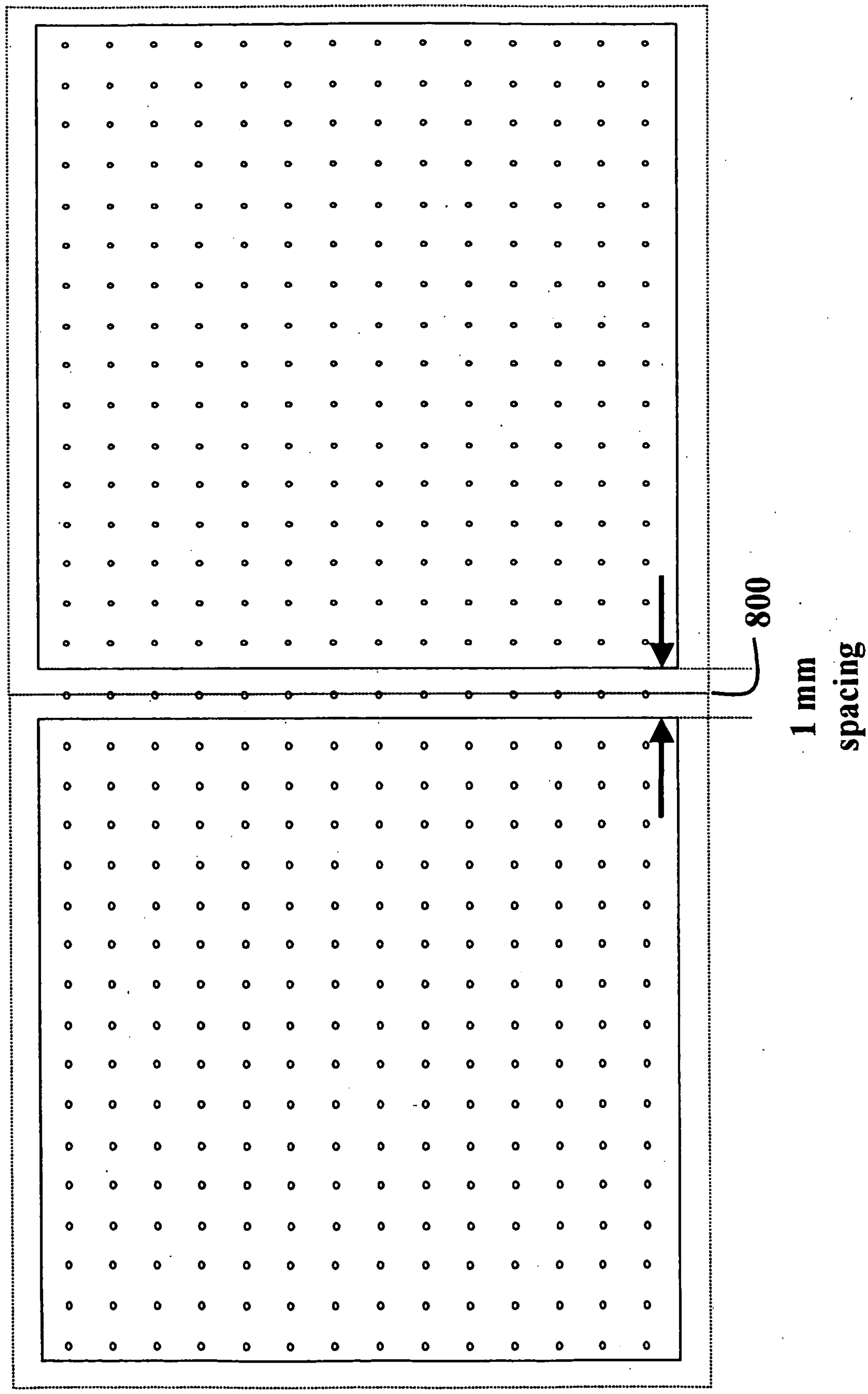


*Fig. 8*

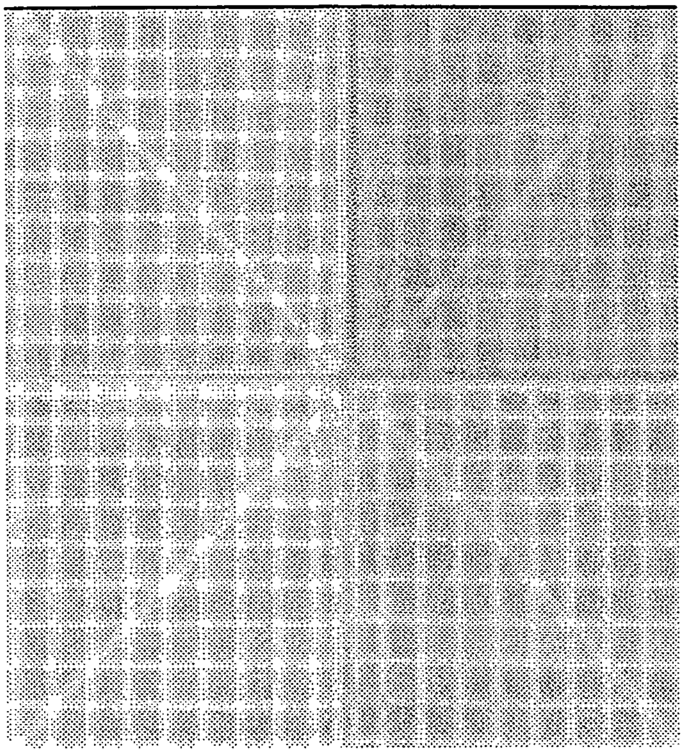

Fig. 9B

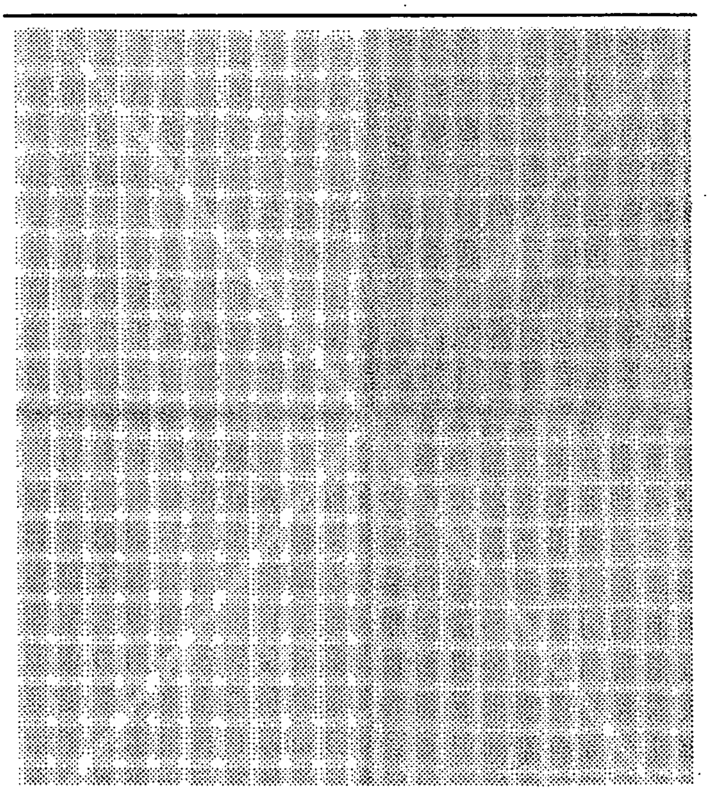

Fig. 9A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004085256 A1
- US 6755537 B1


### Non-patent literature cited in the description


- **RASKAR et al.** Blending Multiple Views. *the tenth Pacific conference on computer graphics and applications,* October 2002, 145-153
- **RASKAR et al.** Multiprojector Displays using Camera-based Registration. *IEEE Visualization,* October 1999
- **RASKAR et al.** A Low Cost Projector Mosaic with Fast Registration. *Fifth Asian Conference on Computer Vision,* January 2002, 161-168
- **SUKTHANKAR et al.** Smarter Presentations: Exploiting Homography in Camera-Projector Systems. *International Conference on Computer Vision,* 2001
- **CHEN et al.** Scalable Alignment of Large-Format Multi-Projector Displays Using Camera Homography Trees. *IEEE Visualization,* 2002
- **RASKAR et al.** ilamps: geometrically aware and self-configuring projectors. *ACM Trans. Graph.,* 2003, vol. 22 (3), 809-818
- **PINHANEZ et al.** The Everywhere Displays Projector: A Device to Create Ubiquitous Graphical Interfaces. *Ubiquitous Computing 2001 (Ubicomp''01,* September 2001
- **PINHANEZ et al.** Using a Steerable Projector and a Camera to Transform Surfaces into Interactive Displays. *ACM Conference on Human Factors in Computing Systems (CHI 2001,* March 2001, 369-370